# EUROPÄISCHE PATENTSCHRIFT

(11) **EP 4 005 786 B1**
(45) Veröffentlichungstag und Bekanntmachung des Hinweises auf die Patenterteilung: **29.11.2023**
(21) Anmeldenummer: 21198486.9
(22) Anmeldetag: 23.09.2021
(51) Int. Cl.: B32B 3/26, B32B 3/30, B32B 1/06, B32B 21/04, B32B 21/08, B32B 27/06, B44C 1/22, B44C 3/00, B44C 3/08, B44C 3/10, B44F 1/06, B29C 39/02, B29C 39/44, B29K 63/00, B29L 31/30

(54) **VERFAHREN ZUM HERSTELLEN EINES FORMTEILS**
METHOD FOR PRODUCING A MOULDED PART
PROCÉDÉ DE FABRICATION D'UNE PIÈCE MOULÉE

(30) Priorität: 25.11.2020 DE 102020131229
(43) Veröffentlichungstag der Anmeldung: 01.06.2022
(73) Patentinhaber: Novem Car Interior Design GmbH, 95519 Vorbach (DE)
(72) Erfinder: Kraft, Alexander, 91257 Pegnitz (DE); Beer, Christoph, 95469 Speichersdorf (DE); Wiesent, Martin, 95514 Neustadt (DE); Kirchenbauer, Robert, 92685 Floß (DE); Meinen, Thomas, 84431 Heldenstein, Weidenbach (DE)
(74) Vertreter: Schlögl, Markus

(56) Entgegenhaltungen:
- EP-A1- 3 162 526
- DE-A1- 4 220 646
- DE-A1-102016 120 421
- DE-B4-102012 002 650

## Beschreibung

Die Erfindung betrifft ein Verfahren zum Herstellen eines Formteils, insbesondere eines als Formteil ausgebildeten Dekorteils und/oder Verkleidungsteils für einen Fahrzeuginnenraum.

Im Fahrzeuginnenraum werden zahlreiche Dekor- und Verkleidungsteile eingebaut, beispielsweise Türverkleidungen, Konsolen- und Instrumentenverblendungen. Zu den Dekor- und Verkleidungsteilen zählen auch Bedientasten bzw. deren Abdeckungen.

Bei derartigen Formteilen bestehen stets hohe Anforderungen an die optische Gestaltung. Besonders gewünscht sind Symboldarstellungen an der sichtseitigen Vorderseite des Formteils.

Bei dem oder den Symbolen handelt es sich bevorzugt um ein oder mehrere Funktionssymbole oder Geometrien oder Formen oder formfolgende Linien, welche auf der Sichtseite der Dekorschicht des Formteils dargestellt werden. Ferner kann es sich bei dem Symbol bzw. den Symbolen auch um einen oder mehrere Buchstaben, Schriftzüge, Zeichen oder sonstige Gestaltungselemente (Designelemente) handeln.

Bei bekannten Verfahren zum Herstellen solcher Formteile, beispielsweise bei dem aus der Druckschrift DE 10 2016 120 421 A1 bekannten Verfahren, sind die einzelnen Verfahrensschritte nicht getaktet bzw. aufeinander abgestimmt. Das Einbringen des Füllmaterials wird manuell durch Rakeln bewerkstelligt. Um das Material einzurakeln, muss das Bauteil zwingend maskiert sein. Die Maskierung muss anschließend aufwendig wieder entfernt werden. Daraus resultiert eine hohe Nachbearbeitungszeit.

Das händische Rakeln hat ferner den Nachteil, dass es einen hohen handwerklichen Aufwand mit sich bringt, zeitintensiv ist und vor allem eine Reproduzierbarkeit und Ergebnisqualität vom handwerklichen Geschick abhängig macht. Dies wiederum führt zu einer schwierigen bzw. aufwändigen Qualitätssicherung, hohen Ausschussraten und aufwändiger Nacharbeit.

Die Notwendigkeit des Vorsehens einer Maskierung bei Rakelverfahren bringt wiederum auch für sich Nachteile mit sich. Zum einen fallen durch die Maskierung zusätzliche Materialkosten und zusätzlicher Abfall an. Zum anderen sind Maskierungen schwierig aufzubringen, insbesondere bei komplexen Oberflächengeometrien. Dies führt zu zusätzlichem handwerklichen Aufwand und zusätzlichen Fehlerquellen, beispielsweise Verzug, Blaseneinschluss und ungleichmäßiger Haftung.

Der Erfindung liegt daher die Aufgabe zugrunde, ein neues Verfahren zum Herstelten eines Formteils anzugeben, insbesondere ein Verfahren, das die vorgenannten Nachteile zumindest weitestgehend überwindet.

Diese Aufgabe wird gelöst durch ein Verfahren mit den Merkmalen des Anspruchs 1. Vorteilhafte Ausgestaltungen und Weiterbildungen sind in den abhängigen Ansprüchen angegeben.

Das erfindungsgemäße Verfahren ist zum Herstellen eines Formteils, insbesondere eines als Formteil ausgebildeten Dekorteils und/oder Verkleidungsteils für einen Fahrzeuginnenraum vorgesehen und/oder ausgebildet.

Das Formteil umfasst eine Dekorschicht, insbesondere ein Holzfurnier, mit einer als Sichtseite ausgebildeten Vorderseite und einer der Vorderseite gegenüberliegenden Rückseite und einen an der Rückseite der Dekorschicht angeordneten Träger, insbesondere einen Kunststoffträger.

In der Dekorschicht sind ein oder mehrere Kavitäten vorgesehen, wobei die Kavitäten sich von der Vorderseite der Dekorschicht aus in das Formteil hinein oder durch das Formteil hindurch erstrecken und mit Füllmaterial gefüllt sind, und wobei jede Kavität für sich und/oder die Gesamtheit der Kavitäten und/oder ein oder mehrere Teilmengen der Kavitäten jeweils ein Symbol an der als Sichtseite ausgebildeten Vorderseite der Dekorschicht ausbilden. Wenn vor- oder nachstehend von Kavitäten in der Pluralform gesprochen wird, ist hiermit auch, soweit dies dem jeweiligen Sinn nicht widerspricht, die Einzahl umfasst, das heißt es könnte sich jeweils auch nur um eine Kavität handeln.

Das erfindungsgemäße Verfahren umfasst die Schritte:
a) Bereitstellen eines Dekormaterials zur Bildung der Dekorschicht,
b) Anbringen des Trägers an die Rückseite der Dekorschicht, insbesondere mittels Hinterspritzen der Dekorschicht mit einem Kunststoffmaterial,
c) Einbringen einer oder mehrerer Kavitäten in das Formteil von der Vorderseite der Dekorschicht aus,
d) Festlegen einer oder mehrerer zu befüllender Kavitäten, wobei vorzugsweise alle Kavitäten befüllt werden,
e) Auswählen eines Füllmaterials zum Füllen der Kavitäten,
f) Ausmessen des Volumens jeder zu befüllenden Kavität,
g) Festlegen einer vorgesehenen Füllhöhe des vorgesehenen Füllmaterials für jede zu befüllende Kavität einzeln oder für alle zu befüllenden Kavitäten,
h) Berechnen des individuellen Dosiervolumens des vorgesehenen Füllmaterials für jede zu befüllende Kavität, wobei das Dosiervolumen in Abhängigkeit vom ausgemessenen Volumen der jeweiligen Kavität und von der jeweils vorgesehenen Füllhöhe des Füllmaterials berechnet wird,
i) Füllen der zum Befüllen festgelegten Kavitäten mit dem jeweils berechneten Dosiervolumen des Füllmaterials mittels einer Dosiereinheit,
j) Aushärten des Füllmaterials.

Die Vorteile des erfindungsgemäßen Verfahrens liegen insbesondere darin, dass Prozessschwankungen weitestgehend vermieden werden können, zumindest deutlich mehr als bei bekannten Verfahren. Dies wird insbesondere durch das präzise Ausmessen der Kavitäten ermöglicht.

Die bekannten Verfahren zum Herstellen vorgenannter Formteile unterliegen starken Prozessschwankungen, insbesondere beim Einbringen der Kavität oder Kavitäten in die Dekorschicht, insbesondere in Holzfurniere. Dies führt zu unterschiedlichen Kavitätsvolumina. Um ein Unter- bzw. Überfüllen der Kavitäten in Bezug auf die vorzusehende Füllmenge zu vermeiden, sieht die Erfindung die genaue Vermessung der Kavitätsvolumina in Verbindung mit präziser volumetrischer Applikation des Füllstoffs, beispielsweise mittels eines Jet-Dispensers, vor. Diese Vermessung bildet die Grundlage dafür, dass ein Unter- bzw. Überfüllen der Kavitäten vermieden werden kann oder ein vorgesehenes, definiertes Unter- oder Überfüllen ermöglicht wird.

Dies bringt den weiteren Vorteil mit sich, dass der Verbrauch an Füllmaterial zumindest weitgehend der tatsächlich erforderlichen Menge zum Füllen der Kavitäten entspricht. Dadurch lässt sich im Vergleich zu den bekannten Verfahren der Verbrauch an Füllmaterial reduzieren, was unter anderem Kosteneinsparungen mit sich bringt. Es liegen somit keine prozessbedingten Überschussmengen oder Restmengen vor, wie dies beispielsweise beim Rakeln der Fall wäre.

Ein weiterer Vorteil der Erfindung liegt darin, dass im Vergleich zu bekannten Rakelverfahren eine Maskierung der Vorderseite der Dekorschicht nicht zwingend erforderlich ist. Bei Bedarf kann eine solche jedoch nach wie vor eingesetzt werden, beispielsweise zum Erzeugen haptisch erfühlbarer Überstände.

Ferner bringt das erfindungsgemäße Verfahren den Vorteil mit sich, dass Prozesszeiten verkürzt und Ausschussquoten verringert werden können. Dies ist insbesondere bedingt durch die Verkettbarkeit und Integrierbarkeit der Teilprozesse, einschließlich der Hilfsprozesse. Vor allem wird jedoch der Nachbearbeitungsaufwand verringert. Dies ermöglicht wiederum eine hohe Prozesssicherheit.

Ein weiterer Vorteil liegt darin, dass mit dem erfindungsgemäßen Verfahren aufgrund der präzisen volumetrischen Applikation des Füllstoffs, beispielsweise mittels eines Jet-Dispensers, auch unterschiedlich farbige Designelemente hergestellt werden können. Hierzu müssen lediglich zusätzlich zu den Schritten d) und e) eine oder mehrere weitere zu befüllende Kavitäten festgelegt und ein weiteres Füllmaterial zum Füllen dieser Kavitäten ausgewählt werden. Die Schritte f) bis h) laufen für die weitere bzw. weiteren zu befüllenden Kavitäten wie bei den zu befüllenden Kavitäten ab. In Schritt i) ist dann ergänzend vorzusehen, dass die weitere bzw. die weiteren zum Befüllen festgelegten Kavitäten mit dem jeweils berechneten Dosiervolumen des weiteren Füllmaterials mittels einer Dosiereinheit gefüllt werden. In Schritt j) ist ergänzend auch das Aushärten des weiteren Füllmaterials vorzusehen. Das Verfahren lässt sich auch auf eine oder mehrere dritte Kavitäten, die in analoger Weise wie beim Füllen der Kavitäten mit dem genannten Füllmaterial und beim Füllen der weiteren Kavitäten mit dem genannten weitere Füllmaterial mit einem dritten Füllmaterial gefüllt werden, erweitern. Gleiches gilt für vierte, fünfte, usw. Kavitäten und vierte, fünfte, usw. Füllmaterialien. Dadurch entsteht, bei entsprechender Auswahl an Füllstoffen, ein Formteil mit Symbolen in zwei oder mehreren unterschiedlichen Farben an der als Sichtseite ausgebildeten Vorderseite.

Alle oder einzelne der Symbole können durchleuchtbar sein. Zweckmäßigerweise ist das Formteil in diesem Fall derart ausgebildet, dass das oder die durchleuchtbaren Symbole rückseitig beleuchtbar sind, wobei das Licht zur rückseitigen Beleuchtung typischerweise von einer bzw. einem im und/oder an dem Träger angeordneten Lichtquelle oder Lichtleiter ausgeht. Bei rückseitiger Beleuchtung werden die durchleuchtbaren Symbole durchleuchtet und sind daher bei Dunkelheit in ihrer Durchleuchtungsfarbe sichtbar (Nachtdesign). Bei ausgeschalteter Beleuchtung werden die Symbole nicht durchleuchtet, sondern an ihrer Vorderseite angestrahlt und erscheinen somit in ihrer vorderseitigen Beleuchtungsfarbe (Tagdesign).

Das erfindungsgemäße Verfahren ist vorteilhafterweise vollständig automatisiert oder automatisierbar. Auf diese Weise lässt sich eine Unabhängigkeit von manuellen Prozessen oder Prozessschritten erreichen, wodurch auch die Prozesskontrolle erleichtert wird und Prozesszeiten weiter verkürzt werden. Der Durchsatz der herzustellenden Formteile ist mit dem erfindungsgemäßen Verfahren zudem genau skalierbar.

Der Träger des Formteils kann sowohl vor dem Einbringen der Kavität oder der Kavitäten an die Rückseite der Dekorschicht angebracht werden als auch vor oder nach jedem beliebigen weiteren Verfahrensschritt. Gleiches gilt für eventuell anzubringende Lichtquellen und/oder Lichtleiter zur rückseitigen Beleuchtung der Dekorschicht und/oder der Symbole. Der Träger und gegebenenfalls auch weitere Zwischenschichten können vollständig oder teilweise transparent bzw. transluzent ausgebildet sein und so selbst als Lichtleiter dienen, um gegebenenfalls die Weiterleitung des Lichts an die Rückseite der Dekorschicht und/oder der Symbole zu ermöglichen.

Die Kavitäten erstrecken sich in das Formteil hinein, wobei die Kavitäten sich nur teilweise in die Dekorschicht hinein oder vollständig durch die Dekorschicht hindurch erstrecken können, ohne sich in weitere Schichten zu erstrecken, oder durch die Dekorschicht hindurch und weiter bis in weitere Schichten des Formteils, beispielsweise eine Zwischenschicht oder den Träger, erstrecken können. Ferner kann vorgesehen sein, dass die Kavitäten sich durch alle Schichten des Bauteils hindurcherstrecken können.

Bevorzugt ist vorgesehen, dass das Verfahren ohne einen Rakelschritt oder andere manuelle Arbeitsschritte durchgeführt wird.

Es kann vorgesehen sein, dass eine Zwischenschicht zwischen der Dekorschicht und dem Träger vorgesehen ist, wobei die Zwischenschicht insbesondere ein Vlies umfasst, wobei das Vlies vorzugsweise an die Rückseite der Dekorschicht kaschiert ist. Die Zwischenschicht wird bevorzugt an die Rückseite der Dekorschicht angebracht bevor der Träger angebracht wird.

Gemäß einer Ausführungsvariante der Erfindung ist die vorgesehene Füllhöhe eine erste Füllhöhe, wobei zum Vorsehen der ersten Füllhöhe die Kavität oder Kavitäten derart vollständig mit Füllmaterial gefüllt werden, dass die sichtseitige Oberfläche des Füllmaterials in einer Ebene mit der Vorderseite der Dekorschicht liegt.

Gemäß einer weiteren Ausführungsvariante ist die vorgesehene Füllhöhe eine zweite Füllhöhe, wobei zum Vorsehen der zweiten Füllhöhe die Kavität oder Kavitäten derart teilweise mit Füllmaterial gefüllt werden, dass die sichtseitige Oberfläche des Füllmaterials hinter der Vorderseite der Dekorschicht zurücksteht, insbesondere um 1 bis 50% der ersten Füllhöhe zurücksteht, so dass eine Vertiefung in der Vorderseite der Dekorschicht ausgebildet wird.

Gemäß einer dritten Ausführungsvariante der Erfindung ist die vorgesehene Füllhöhe eine dritte Füllhöhe, wobei zum Vorsehen der dritten Füllhöhe die Kavität oder Kavitäten derart mit Füllmaterial überfüllt werden, dass die sichtseitige Oberfläche des Füllmaterials über die Vorderseite der Dekorschicht hinaussteht, insbesondere um 1 bis 50% der ersten Füllhöhe hinaussteht, so dass ein Überstand an der Vorderseite der Dekorschicht ausgebildet wird.

Zum Erzeugen des Überstands in einer ersten, insbesondere kleineren, Ausbildung kann zweckmäßigerweise die Oberflächenspannung des Füllmaterials genutzt werden.

Zum Erzeugen des Überstands in einer zweiten, insbesondere größeren, Ausbildung kann zweckmäßigerweise eine Maskierung genutzt werden, wobei das Füllmaterial derart in die Kavität oder Kavitäten eingefüllt wird, dass das Füllmaterial bis zur Vorderseite der Maskierung oder über die Vorderseite der Maskierung hinaus eingefüllt wird. Anschließend, beispielsweise nach dem Aushärten des Füllmaterials, kann die Maskierung entfernt werden, so dass ein Überstand an Füllmaterial an der Vorderseite der Dekorschicht erzeugt wird.

Alternativ zur Verwendung einer Maskierung, kann auch ein Shot-and-Fuse-Verfahren zum Erzeugen des Überstands angewendet werden, wobei das Füllmaterial bei dem Shot-and-Fuse-Verfahren tropfenweise, das heißt in Form kleiner diskreter Volumina, und/oder schichtweise in die Kavität oder Kavitäten eingefüllt wird, wobei jeder Tropfen Füllmaterial beim Applizieren, insbesondere auf dem Weg von der Dosiereinheit zur jeweiligen Kavität, vorgehärtet und/oder angeliert wird. Zum Vorhärten und/oder Aushärten und/oder Angelieren wird jeder Tropfen Füllmaterial, beispielsweise mittels einer Strahlungsquelle, insbesondere einer UV-Quelle oder einem Laser, bestrahlt.

Bevorzugt werden die Kavitäten durch einen Laserprozess, insbesondere durch Laserablation, und/oder durch Mikrofräsen und/oder durch Ätzen, beispielsweise bei Metall- oder Kunststoffoberflächen der Dekorschicht, und/oder durch elektroerosive Verfahren und/oder durch Stanzen und/oder durch Stanzschneiden in die Dekorschicht eingebracht.

Bei der Verwendung eines Laserprozesses zur Einbringung der Kavitäten kann zweckmäßigerweise ein Schutzgas-Laserprozess zur Vermeidung von Verbrennungs- und/oder Verfärbungseffekten durchgeführt werden, vorzugsweise mit Stickstoff als Schutzgas. Ferner kann das das herzustellende Formteil bildende Bauteil während des Laserprozesses gekühlt werden.

Beispielsweise kann das Volumen jeder zu befüllenden Kavität durch eine Messeinheit, beispielsweise mittels Lasertriangulation, ausgemessen werden. Andere Messverfahren sind ebenso möglich.

Beim Ausmessen des Volumens jeder zu befüllenden Kavität kann auch die Position der jeweiligen Kavität gemessen werden und die Dosiereinheit zum Füllen der jeweiligen Kavität mit Füllmaterial auf Basis der gemessenen Positionsdaten positionsgenau zur jeweiligen Kavität gesteuert werden.

Es kann vorgesehen sein, dass vor und/oder nach dem Einbringen der Kavitäten die Vorderseite der Dekorschicht gereinigt wird, insbesondere mechanisch und/oder mittels Druckluft, insbesondere mittels eines Druckluftstrahlverfahrens, und/oder mittels CO2-Behandlung, insbesondere mittels CO2-Schneestrahlen, und/oder mittels Trockeneisstrahlen.

Alternativ oder additiv können vor dem Ausmessen des Volumens und/oder vor dem Füllen der Kavitäten die Kavitäten, insbesondere die Begrenzungsflächen der Kavitäten, gereinigt werden, insbesondere mechanisch und/oder mittels Druckluft und/oder CO2-Behandlung, und/oder vorbehandelt werden, insbesondere durch Plasmabehandlung und/oder Koronabehandlung und/oder Bedampfung und/oder Begasung. Prinzipiell kommen alle physikalischen, chemischen oder mechanischen Verfahren in Betracht.

Gemäß einer Ausführungsvariante des erfindungsgemäßen Verfahrens wird vor dem Einbringen der Kavitäten, und vorzugsweise nach dem Reinigen der Vorderseite der Dekorschicht, eine Maskierung, insbesondere eine Maskierungsfolie, an der Vorderseite der Dekorschicht angebracht. Ferner kann auch eine ablösbare Lackschicht als Maskierung angebracht werden.

Ferner kann vorgesehen sein, dass das Füllmaterial nach dem Füllen der Kavitäten belichtet und/oder erwärmt und/oder beheizt und/oder begast, insbesondere aerob oder anaerob, und/oder Luftfeuchtigkeit und/oder Unter- und/oder Überdruck ausgesetzt wird, um das Aushärten des Füllmaterials zumindest zu unterstützen. Die Belichtung wird bevorzugt mittels einer Belichtungseinheit durchgeführt. Auch kann vorgesehen sein, dass das Füllmaterial nach dem Füllen der Kavitäten bestrahlt, insbesondere ionisierend, beispielsweise mittels Röntgenstrahlung, oder nicht-ionisierend bestrahlt, wird, um das Aushärten des Füllmaterials zumindest zu unterstützen. Die Bestrahlung wird bevorzugt mittels einer Bestrahlungseinheit durchgeführt.

Eine Weiterbildung der Erfindung sieht vor, dass die Verunreinigung und/oder Verfärbungen des das herzustellende Formteil bildenden Bauteils nach dem Einbringen der Kavitäten und/oder die Kantenqualität der Kavitäten und/oder die Füllqualität, insbesondere die Füllhöhe und/oder die Blasenbildung, des eingefüllten Füllmaterials zumindest stichprobenartig, insbesondere zu vorgegebenen Zeitpunkten und/oder nach vorgegebenen Verfahrensschritten im Verfahrensablauf, gemessen und mit vorgegebenen Sollvorgaben verglichen werden, beispielsweise zur Qualitätskontrolle. Beispielsweise kann hierbei Lasertriangulation und/oder eine Kamera- bzw. Bildüberwachung eingesetzt werden. Bei einer Abweichung von Sollvorgaben können Verfahrenskorrekturen und/oder Nachbearbeitungsschritte zur Angleichung an die Sollvorgaben durchgeführt werden. Beispielsweise kann bei einer festgestellten zu starken Verunreinigung nochmals ein Reinigungsschritt durchgeführt werden. Bei einer festgestellten unzureichenden Kantenqualität können die Kanten der betroffenen Kavitäten nochmals nachgeschnitten werden, insbesondere mittels eines Lasers. Bei einer festgestellten abweichenden Füllhöhe kann entweder nochmals mit Füllmaterial nachgefüllt werden oder zu viel eingebrachtes Füllmaterial abgetragen werden.

Als Füllmaterial kommt beispielsweise ein, insbesondere strahlungsaktivierbares, Reaktionsharz, zum Beispiel Epoxidharz, in Betracht, ohne weitere Füllung oder gefüllt mit Festkörperpartikeln.

Das Füllmaterial umfasst vorzugsweise Additive wie Farbpigmente zur Einfärbung und/oder licht- und/oder strahlungsaktivierbare Substanzen, beispielsweise UV-aktivierbare Substanzen, und/oder Fluoreszenz- und/oder Phosphoreszenz-Pigmente zur Erzeugung von Fluoreszenz oder Phosphoreszenz, beispielsweise UV-Pigmente.

Als Füllmaterial zum Füllen der Kavität bzw. der Kavitäten kann gemäß einer Variante des erfindungsgemäßen Verfahrens eine Suspension umfassend Wasser und/oder sonstige flüchtige und nicht abbindende Trägersubstanzen wie beispielsweise Lösemittel wie beispielsweise Butylacetat in die Kavitäten eingebracht werden. Dem Feststoff, der Trägersubstanz oder der Suspension selbst bestehend aus Feststoff und Trägersubstanz können die vorgenannten Additive, beispielsweise Farbpigmente und/oder strahlungsaktivierbare Substanzen und/oder Fluoreszenz- und/oder Phosphoreszenz-Pigmente, als Additive zugegeben werden. Anschließend trocknet die Suspension durch Verdunsten oder Diffusion der Trägersubstanz wie z.B. Wasser bzw. sonstige Lösemittel und der Feststoff der Suspension, der gegebenenfalls Additive umfasst bzw. Additive in der Trägersubstanz bleiben in der bzw. den Kavitäten zurück. Je nach Beschaffenheit der Suspension können die Feststoffe bzw. Feststoffpartikel mehr oder weniger fest aneinander haften ("verbacken"), verkleben oder sich untereinander verhaken und auf diese Weise immobilisiert bzw. fixiert sein oder ungebunden, das heißt lose, in der Kavität verbleiben, was eine nachfolgend beschriebene weitere Verfahrensstufe umfassend einen weiteren Füllvorgang erforderlich macht, beispielsweise mit einem Binder wie Reaktionsharz, z.B. Epoxidharz, als Füllmaterial, der die immobilisierten bzw. fixierten oder losen Feststoffpartikel durchtränkt und stabil bindet.

Durch Erwärmen des das herzustellende Formteil bildenden Bauteils während und/oder nach dem Füllprozess kann das Verdunsten bzw. die Diffusion der Flüssigkeit beschleunigt werden. Mit der Verflüchtigung der Trägersubstanz ist in der Regel ein Massen- bzw. Volumenverlust verbunden. Durch einen weiteren Füllvorgang kann die Kavität bzw. können die Kavitäten dann in gewünschter Höhe mit Füllmaterial aufgefüllt werden. Danach härtet dieses Füllmaterial aus, beispielsweise unterstützt durch Belichten, wobei gleichzeitig die darunterliegende Teilfüllung gebunden bzw. versiegelt wird. Hierbei kann der nachfolgend beschriebene mindestens zweistufige Prozess angewandt werden.

Als Füllmaterial zum Füllen der Kavität bzw. der Kavitäten kann gemäß einer weiteren Variante des erfindungsgemäßen Verfahrens eine Suspension umfassend eine abbindende Trägersubstanz, wie beispielsweise eine Dispersion von Acrylpolymeren und Wasser oder PVA (Polyvinylalkohol) in die Kavitäten eingebracht werden. Das Abbinden geschieht dabei zum Beispiel durch Verdunsten oder Diffundieren von Lösemitteln oder Wasser. Dem Feststoff in der Suspension können die vorgenannten Additive, beispielsweise Farbpigmente und/oder Fluoreszenz- und/oder Phosphoreszenz-Pigmente, als Additive zugegeben werden. Anschließend härtet das Füllmaterial aus, indem die Trägersubstanz abbindet bzw. aushärtet beispielsweise durch Polymerisation und damit die Festkörperpartikel fixiert. Durch Erwärmen des das herzustellende Formteil bildenden Bauteils oder örtliches Erwärmen des Bereichs der zu füllenden und/oder im Füllprozess befindlichen und/oder bereits gefüllten Kavität und/oder des Füllstoffs selbst während und/oder nach dem Füllprozess kann das Aushärten beschleunigt werden. Mit dem Abbinden bzw. Aushärten kann ein Volumenverlust verbunden sein, der dazu führt, dass die Kavität bzw. die Kavitäten nicht mehr in der gewünschten Höhe gefüllt sind oder aber eine Unterfüllung der Kavität bzw. die Kavitäten wird bewusst angestrebt zum Beispiel für einen nachfolgenden Versiegelungsschritt.

In diesem Fall kann ein weiterer Füllvorgang erfolgen, bei dem die Kavität bzw. die Kavitäten in gewünschter Höhe mit Füllmaterial, beispielsweise einem nicht mit Feststoffe versetzten oder auch einem mit Feststoffen versetzten Reaktionsharz wie Epoxidharz, gefüllt werden und dieses Füllmaterial danach aushärtet, beispielsweise unterstütz durch Belichten. Hierbei kann der nachfolgend beschriebene mindestens zweistufige Prozess angewandt werden.

Das Füllmaterial umfasst vorzugsweise Basisbestandteile und Additive. Die Basisbestandteile umfassen bevorzugt Feststoffpartikel und eine Matrix. Als Feststoffpartikel kommen beispielsweise Glas und/oder Titandioxid und/oder Metalle in Betracht. Als Matrix kommen beispielsweise duroplastische oder thermoplastische Binder und/oder Polymere, insbesondere Epoxidharz oder PVA, in Betracht. Auch kommen flüchtige oder nicht flüchtige, insbesondere flüssige, Trägersubstanzen als Matrix in Betracht. Bei den Additiven kann es sich um Katalysatoren, beispielsweise Härter oder Photoinitiatoren, und/oder Pigmente, beispielsweise Farb- und/oder Fluoreszenz- und/oder Phosphoreszenz-Pigmente, handeln. Bei dem Füllmaterial kann es sich, sowohl in der ersten wie auch in der zweiten Stufe, aber auch um die Matrix bzw. Trägersubstanz als einzigem Stoff handeln, also beispielsweise um ein reines Reaktionsharz wie Epoxidharz ohne weitere Feststoffpartikel. Wird beispielsweise in der ersten Stufe eine Kavität lediglich mit Reaktionsharz ohne Zusatz von Feststoffpartikeln gefüllt, so kann die Kavität in der zweiten Stufe mit Reaktionsharz mit Zusatz von Feststoffpartikeln gefüllt werden, oder umgekehrt.

Weitere mögliche Feststoffpartikel für das Füllmaterial können Metalle, beispielsweise Pulver und/oder Flakes, und/oder phosphoreszierende Pigmente und/oder Schichtsilikate, beispielsweise Muskovit, Talk und/oder Glimmer, und/oder Iriodine (Glimmer-Perlgkanzpigmente) und/oder Eisenoxide, beispielsweise gecoated oder ungecoated, und/oder oxidische Stoffe, beispielsweise Aluminiumoxid, Berylliumoxid und/oder Titandioxid, und/oder nichtoxidische Stoffe, beispielsweise Siliciumcarbid, Borcarbid und/oder Bornitrid, und/oder Kohlenstoffe, beispielsweise Grafite, Ruße, CNTs und/oder Diamant, und/oder Silicate, beispielsweise Natriumsilicat, Kaliumsilicat und/oder Lithiumsilicat, und/oder Füllstoffe mit bestimmten Geometrien, beispielsweise Kugeln, Sphären, Fasern, Würfel und/oder Tetraeder, sein.

Es kann vorgesehen sein, dass das Füllen der Kavitäten in einem einstufigen Prozess mit einem bestimmten Füllmaterial durchgeführt wird.

Alternativ kann das Füllen der Kavitäten in einem mindestens zweistufigen Prozess durchgeführt werden. Hierbei werden in der ersten Stufe zumindest die vorgenannten Schritte a) bis i) ausgeführt (Schritt j), das Aushärten, kann zusätzlich erfolgen, ist bei einem zweistufigen Prozess am Ende der ersten Stufe aber nicht zwingend erforderlich; abhängig von Füllmaterial der ersten Stufe kann beispielsweise auch lediglich eine Trägersubstanz verdunsten und ein Feststoff ohne Aushärtung in der Kavität verbleiben), gegebenenfalls auch ein oder mehrere der weiteren vorstehend erläuterten, optionalen Verfahrensschritte. Ergebnis dieser Schritte sind weiterhin ungefüllte und/oder nur teilweise gefüllte Kavitäten. Anschließend werden in der zweiten Stufe zumindest folgende Schritte ausgeführt werden:
k) Festlegen einer oder mehrerer in der zweiten Stufe zu befüllender Kavitäten,
l) Auswählen eines Füllmaterials zum Füllen der festgelegten Kavität oder Kavitäten in der zweiten Stufe,
m) Ausmessen des noch nicht gefüllten Volumens jeder in der zweiten Stufe zu befüllenden Kavität,
n) Festlegen einer vorgesehenen Füllhöhe des vorgesehenen Füllmaterials für jede zu befüllende Kavität einzeln oder für alle zu befüllenden Kavitäten,
o) Berechnen des individuellen Dosiervolumens des vorgesehenen Füllmaterials für jede zu befüllende Kavität, wobei das Dosiervolumen in Abhängigkeit vom ausgemessenen Volumen der jeweiligen Kavität und von der jeweils vorgesehenen Füllhöhe des Füllmaterials berechnet wird,
p) Füllen der zum Befüllen festgelegten Kavität oder Kavitäten mit dem jeweils berechneten Dosiervolumen des Füllmaterials mittels einer weiteren oder der Dosiereinheit,
q) Aushärten des Füllmaterials.

Hierbei sind die Schritte m) bis p) nicht zwingend erforderlich, diese können auch entfallen.

Der zweistufige Prozess kann als so genannter "nass-in-nass" Prozess durchgeführt werden, wobei die zweite Stufe bereits durchgeführt wird, wenn sich das in der ersten Stufe in die Kavitäten gefüllte Füllmaterial noch im flüssigen Zustand befindet, also noch nicht ausgehärtet ist. In Schritt q) härtet in diesem Fall das in beiden Verfahrensstufen eingebrachte Füllmaterial gemeinsam aus. Alternativ kann der zweistufige Prozess als sogenannter "nass-in-trocken" Prozess durchgeführt werden, wobei vor Beginn der zweiten Stufe zunächst zumindest Schritt j) durchgeführt wird, das Aushärten des in der ersten Stufe in die Kavitäten eingebrachten Füllmaterials, gegebenenfalls unterstützt durch Aufwärmen und/oder Belichten und/oder weitere Maßnahmen. Ferner kann der zweistufige Prozess als sogenannter "nass-ingel" Prozess durchgeführt werden, wobei die zweite Stufe bereits durchgeführt wird, wenn sich das in der ersten Stufe in die Kavitäten gefüllte Füllmaterial in einem gelierten Zustand befindet, also noch nicht in Gänze ausgehärtet ist. In Schritt q) härtet in diesem Fall das in beiden Verfahrensstufen eingebrachte Füllmaterial gemeinsam vollständig aus.

Die Vorteile des zweistufigen Prozesses liegen insbesondere darin, dass sich eine höhere Volumengenauigkeit der Füllung erzielen lässt, da die gegebenenfalls auftretende Materialschwindung nach dem vorangegangenen Füllschritt in der zweiten Stufe ausgeglichen werden kann. Von Vorteil ist hierbei, wenn die verbleibende Füllhöhe in der zweiten Stufe kleiner gewählt wird als die Füllhöhe in der ersten Stufe, da der Absolutbetrag der Schwindung abhängig von der Füllhöhe ist und sich dadurch dementsprechend minimieren lässt. Insbesondere sollte die Füllhöhe für die zweite Stufe derart klein gewählt werden, dass sich Schwindungseffekte in Relation zur Höhe der gesamten Füllung nicht oder kaum bemerkbar machen. Auf diese Weise lassen sich durch einen zweistufigen Prozess im Vergleich zum einstufigen Prozess negative Auswirkungen durch Materialschwindungseffekte zumindest weitgehend kompensieren. Ein weiterer Vorteil des zweistufigen Prozesses ist das geringere Blasenbildungsrisiko im Füllstoff aufgrund der Aufteilung des Füllens auf zwei Stufen und damit jeweils kleinere Volumina pro Füllschritt.

Bei dem zweistufigen Prozess kann in beiden Stufen das gleiche Füllmaterial verwendet werden. Es ist aber auch möglich, verschiedene Füllmaterialien in erster und zweiter Stufe einzusetzen. Beispielsweise kann in der ersten Stufe ein Füllmaterial mit hoher Materialschwindung eingesetzt werden. In der zweiten Stufe kann dann ein Füllmaterial mit keinem oder im Verglich zum Füllmaterial der ersten Stufe nur geringer Schwindung verwendet werden, um eine präzise finale Füllung der Kavitäten zu ermöglichen.

Gegebenenfalls kann der zweistufige Prozess auch in analoger Weise zu einem drei- oder mehrstufigen Prozess erweitert werden.

Gemäß einer Ausführungsform der Erfindung ist vorgesehen, dass eine transparente oder transluzente Schutz- und/oder Optikschicht an der als Sichtseite ausgebildeten Vorderseite der Dekorlage aufgebracht wird, wobei die Schutz- und/oder Optikschicht als Hochglanzschicht, beispielsweise aus PUR, oder offenporig ausgebildet sein kann. Die Schutz- und/oder Optikschicht kann aufgegossen oder aufgesprüht werden.

Es kann vorgesehen sein, dass eine Lichtquelle oder ein Lichtleiter am oder im Formteil, bevorzugt an der Rückseite des Trägers oder seitlich am Formteil, angeordnet wird, wobei die Lichtquelle oder der Lichtleiter zum Beleuchten und/oder Durchleuchten des Füllmaterials in der oder den Kavitäten vorgesehen ist.

Das erfindungsgemäße Verfahren wird nachstehend auch hinsichtlich weiterer Merkmale und Vorteile anhand der Beschreibung eines Ausführungsbeispiels des Verfahrens und unter Bezugnahme auf die beiliegenden, schematischen Zeichnungen näher erläutert. Dabei zeigen
- FIG 1a: eine schematische Schnittdarstellung des herzustellenden Formteils während Verfahrensschritt a) eines Ausführungsbeispiels des erfindungsgemäßen Verfahrens,
- FIG 1b: eine schematische Schnittdarstellung des herzustellenden Formteils nach Verfahrensschritt b) eines Ausführungsbeispiels des erfindungsgemäßen Verfahrens,
- FIG 1c: eine schematische Schnittdarstellung des herzustellenden Formteils während Verfahrensschritt c) eines Ausführungsbeispiels des erfindungsgemäßen Verfahrens,
- FIG 1d: eine schematische Schnittdarstellung des herzustellenden Formteils während Verfahrensschritt f) eines Ausführungsbeispiels des erfindungsgemäßen Verfahrens,
- FIG 1e: eine schematische Schnittdarstellung des herzustellenden Formteils während Verfahrensschritt i) eines Ausführungsbeispiels des erfindungsgemäßen Verfahrens,
- FIG 1f: eine schematische Schnittdarstellung des herzustellenden Formteils während Verfahrensschritt j) eines Ausführungsbeispiels des erfindungsgemäßen Verfahrens,
- FIG 2a: eine schematische Schnittdarstellung des hergestellten Formteils nach Durchführung eines Ausführungsbeispiels des erfindungsgemäßen Verfahrens in einer ersten Variante,
- FIG 2b: eine schematische Schnittdarstellung des hergestellten Formteils nach Durchführung eines Ausführungsbeispiels des erfindungsgemäßen Verfahrens in einer zweiten Variante,
- FIG 2c: eine schematische Schnittdarstellung des hergestellten Formteils nach Durchführung eines Ausführungsbeispiels des erfindungsgemäßen Verfahrens in einer dritten Variante,
- FIG 2d: eine schematische Schnittdarstellung des hergestellten Formteils nach Durchführung eines Ausführungsbeispiels des erfindungsgemäßen Verfahrens in einer vierten Variante.

Einander entsprechende Teile und Komponenten sind auch über die verschiedenen Figuren und Ausführungsbeispiele hinweg jeweils mit den gleichen Bezugszeichen bezeichnet.

Das erfindungsgemäße Verfahren ist zum Herstellen eines Formteils 10 vorgesehen, wobei das Formteil 10 eine als Holzfurnier ausgebildete Dekorschicht 11 mit einer als Sichtseite ausgebildeten Vorderseite 12 und einer der Vorderseite 12 gegenüberliegenden Rückseite 13 und einen an der Rückseite 13 der Dekorschicht 11 angeordneten Träger 14, insbesondere einen Kunststoffträger, umfasst.

In der Dekorschicht 11 sind mehrere Kavitäten 15 vorgesehen, wobei die Kavitäten 15 sich von der Vorderseite 12 der Dekorschicht 11 aus in das Formteil 10 hinein erstrecken und mit Füllmaterial 16 gefüllt sind. Es kann vorgesehen sein, dass jede Kavität 15 für sich und/oder die Gesamtheit der Kavitäten 15 und/oder ein oder mehrere Teilmengen der Kavitäten 15 jeweils ein Symbol an der als Sichtseite ausgebildeten Vorderseite 12 der Dekorschicht 11 ausbilden.

Bei dem oder den Symbolen handelt es sich bevorzugt um ein oder mehrere Funktionssymbole oder Geometrien oder Formen oder formfolgende Linien, welche auf der Sichtseite der Dekorschicht 11 dargestellt werden. Ferner kann es sich bei dem Symbol auch um einen oder mehrere Buchstaben, Schriftzüge, Zeichen oder sonstige Gestaltungselemente handeln.

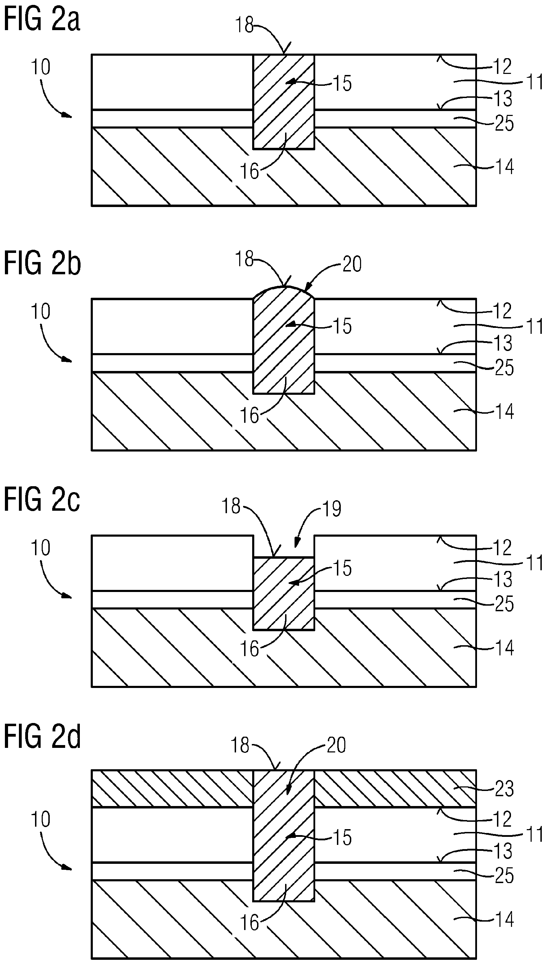

Gemäß den Ausführungsbeispielen nach FIG. 2a bis FIG. 2d ist eine Zwischenschicht 25 zwischen der Dekorschicht 11 und dem Träger 14 vorgesehen, wobei die Zwischenschicht 25 ein Vlies umfasst, wobei das Vlies an die Rückseite 13 der Dekorschicht 11 kaschiert ist.

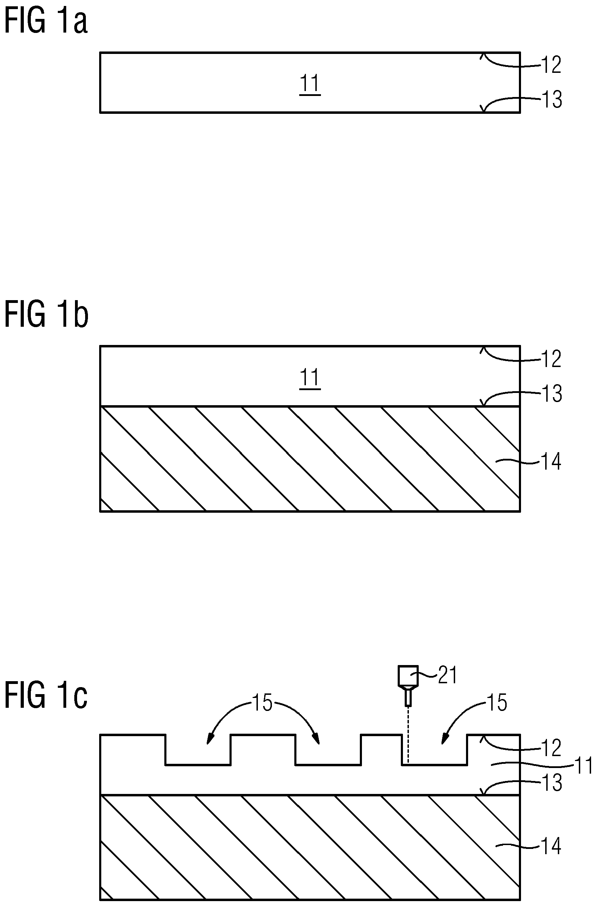

Die Kavität oder Kavitäten 15 erstrecken sich in das Formteil 10 hinein, wobei die Kavitäten 15 sich nur teilweise in die Dekorschicht hinein erstrecken können, wie beispielsweise in FIG. 1c bis 1f dargestellt. Alternativ kann vorgesehen sein, dass sich die Kavitäten 15 durch die Dekorschicht 11 hindurch erstrecken und in weitere Schichten des Formteils 10, wie die Zwischenschicht 25 und den Träger 15, eindringen, wie beispielsweise in FIG. 2a bis 2d dargestellt. Es ist auch möglich, dass die Kavitäten 15 sich durch die Dekorschicht 11 hindurch erstrecken, jedoch nicht in weitere Schichten einzudringen.

Nachfolgend soll ein Ausführungsbeispiel des erfindungsgemäßen Verfahrens, insbesondere einzelnen Verfahrensschritte des Verfahrens, anhand der FIG. 1a bis 1f im Detail erläutert werden.

Gemäß einem in FIG. 1a dargestellten Verfahrensschritt a) wird zunächst ein Dekormaterial zur Bildung der Dekorschicht 11 bereitgestellt. Bei dem Dekormaterial handelt es sich beispielsweise um ein Holzfurnier.

Anschließend wird in einem in FIG. 1b dargestellten Verfahrensschritt b) ein Träger 14 an die Rückseite 13 der Dekorschicht 11 angebracht, indem die Dekorschicht 11 mit einem Kunststoffmaterial hinterspritzt wird. Dieser Schritt kann gegebenenfalls auch zu einem späteren Zeitpunkt, nach Durchführung weiterer Verfahrensschritte, erfolgen.

Bei Bedarf kann nun die Vorderseite 12 der Dekorschicht 11 gereinigt werden, beispielsweise mechanisch oder mittels Druckluft oder CO2-Behandlung.

Nachfolgend werden gemäß dem in FIG. 1c dargestellten Verfahrensschritt c) mehrere Kavitäten 15 von der Vorderseite 12 der Dekorschicht 11 aus in die Dekorschicht 11 eingebracht. Die Kavitäten 15 werden in einem Laserprozess durch einen Laser 21 mittels Laserablation in die Dekorschicht 11 eingebracht. Bei der Verwendung des Lasers 21 kann zweckmäßigerweise ein Schutzgas-Laserprozess zur Vermeidung von Verbrennungs- und/oder Verfärbungseffekten durchgeführt werden, vorzugsweise mit Stickstoff als Schutzgas. Ferner kann das das herzustellende Formteil 10 bildende Bauteil während des Laserprozesses gekühlt werden.

Anschließend können die Begrenzungsflächen 22 der Kavitäten 15 bei Bedarf gereinigt werden, beispielsweise mechanisch oder mittels Druckluft oder CO2. Ferner können die Innenflächen 22 der Kavitäten 15 durch Plasmabehandlung oder Koronabehandlung aber auch mittels Bedampfung oder Begasung vorbehandelt werden.

In einem weiteren Schritt d) wird festgelegt, welche der Kavitäten 15 befüllt werden sollen. In einem Schritt e) wird das Füllmaterial 16 zum Füllen der Kavitäten 15 ausgewählt.

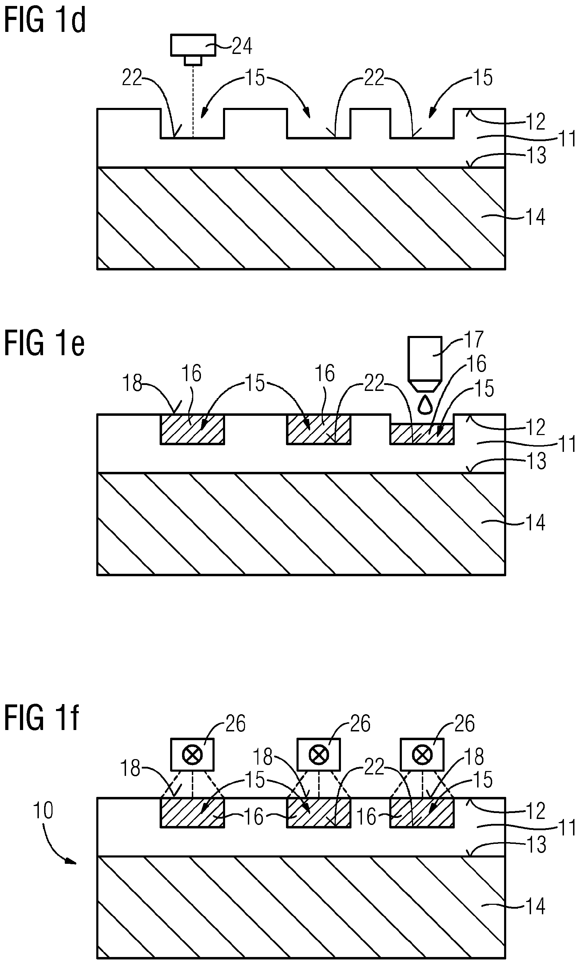

In einem in FIG. 1d dargestellten Verfahrensschritt f) wird nun das Volumen jeder der zu befüllenden Kavitäten 15 durch eine Messeinheit 24 ausgemessen, beispielsweise mittels Lasertriangulation.

Ferner wird gemäß einem Schritt g) eine vorgesehene Füllhöhe des vorgesehenen Füllmaterials 16 für jede zu befüllende Kavitäten 15 einzeln oder für alle zu befüllenden Kavitäten festgelegt. In anderen Worten: Es wird festgelegt, wie hoch die Kavitäten 15 mit Füllmaterial 16 befüllt werden sollen.

Nun wird in einem Verfahrensschritt h) das Dosiervolumen des vorgesehenen Füllmaterials 16 für jede zu befüllende Kavitäten 15 berechnet. Das Dosiervolumen wird dabei in Abhängigkeit vom ausgemessenen Volumen der jeweiligen Kavität 15 und von der jeweils vorgesehenen Füllhöhe des Füllmaterials 16 berechnet.

Daraufhin werden gemäß dem in FIG. 1e dargestellten Schritt i) die Kavitäten 15 mit dem jeweils berechneten Dosiervolumen des Füllmaterials 16 mittels einer Dosiereinheit 17 gefüllt, insbesondere derart, dass die jeweils vorgesehene Füllhöhe erreicht wird. Die Dosiereinheit 17 kann hierbei anhand von bei der Ausmessung jeder zu befüllenden Kavität zusätzlich gewonnenen Positionsdaten der jeweiligen Kavität exakt positioniert werden. Während des Füllprozesses kann das das herzustellende Formteil 10 bildende Bauteil erwärmt werden.

Anschließend härtet das in die Kavitäten 15 gefüllte Füllmaterial 16 gemäß dem in FIG. 1f dargestellten Verfahrensschritt j) aus. Zur Unterstützung bzw. Beschleunigung bzw. zum Starten des Aushärtens wird das Füllmaterial 16 mittels einer Belichtungseinheit 26 belichtet.

Das Füllen der Kavitäten 15 wird gemäß den Ausführungsbeispielen nach FIG. 1a bis FIG. 2d in einem einstufigen Prozess mit einem ausgewählten Füllmaterial 16 durchgeführt.

FIG. 2a bis FIG. 2d zeigen vier mit dem erfindungsgemäßen Verfahren hergestellte Formteile, wobei jedes der Formteile nach FIG. 2a bis FIG. 2d jeweils mit einer anderen Variante des Verfahrens hergestellt wurde.

Gemäß Verfahrensschritt g) wird eine vorgesehene Füllhöhe des vorgesehenen Füllmaterials 16 für jede zu befüllende Kavität 15 festgelegt. Gemäß dem Verfahrensschritt i) werden die Kavitäten 15 mit der berechneten Füllmenge an Füllmaterial 16 mittels einer Dosiereinheit 17 derart gefüllt, dass die jeweils vorgesehene Füllhöhe erreicht wird.

Gemäß einer Variante des Verfahrens ist die vorgesehene Füllhöhe eine erste Füllhöhe, wobei zum Vorsehen der ersten Füllhöhe die Kavitäten 15 derart vollständig mit Füllmaterial 16 gefüllt werden, dass die sichtseitige Oberfläche 18 des Füllmaterials 16 in einer Ebene mit der Vorderseite 12 der Dekorschicht 11 liegt. Gemäß dieser Variante lässt sich ein Formteil herstellen, wie es in FIG. 2a dargestellt ist.

Gemäß einer weiteren Variante des Verfahrens ist die vorgesehene Füllhöhe eine zweite Füllhöhe, wobei zum Vorsehen der zweiten Füllhöhe die Kavitäten 15 derart teilweise mit Füllmaterial 16 gefüllt werden, dass die sichtseitige Oberfläche 18 des Füllmaterials 16 hinter der Vorderseite 12 der Dekorschicht 11 zurücksteht, so dass eine Vertiefung 19 in der Vorderseite 12 der Dekorschicht 11 ausgebildet wird. Gemäß dieser Variante lässt sich ein Formteil herstellen, wie es in FIG. 2c dargestellt ist.

Gemäß einer dritten Variante des Verfahrens ist die vorgesehene Füllhöhe eine dritte Füllhöhe, wobei zum Vorsehen der dritten Füllhöhe die Kavitäten 15 derart mit Füllmaterial 16 überfüllt werden, dass die sichtseitige Oberfläche 18 des Füllmaterials 16 über die Vorderseite 12 der Dekorschicht 11 hinaussteht, so dass ein Überstand 20 an der Vorderseite 12 der Dekorschicht 11 ausgebildet wird. Gemäß der vorstehend erläuterten Ausführungen hergestellte Formteile sind in FIG. 2b und FIG. 2d dargestellt.

Zum Erreichen des Überstands 20 in der ersten, kleineren Ausbildung gemäß FIG. 2b wird die Oberflächenspannung des Füllmaterials 16 genutzt. Das heißt die Kavitäten 15 werden derart mit Füllmaterial 16 gefüllt, dass das Füllmaterial 16 die Kavitäten zwar überfüllt, jedoch nicht seitlich um die Kavitäten 15 herum auf die Vorderseite 12 der Dekorschicht 11 verläuft, sondern aufgrund der Oberflächenspannung einen Überstand 20 ausbildet, der im Bereich der Kavität 15 verbleibt. Mit dieser Variante des Verfahrens lassen sich jedoch nur Überstände 20 in begrenzter Höhe, insbesondere jeweils abhängig von der Oberflächenspannung des Füllmaterials 16 bzw. der Differenz der Oberflächenenergien von Füllmaterial 16 und dem Material der Dekorschicht 16, erzeugen.

Zum Erreichen des Überstands 20 in der zweiten, größeren Ausbildung gemäß FIG. 2d wird eine Maskierung 23 genutzt. Die Maskierung 23, welche beispielsweise durch eine Maskierungsfolie oder andere Maskierungsschicht gebildet ist, wird vor dem Einbringen der Kavitäten 15 an der Vorderseite 12 der Dekorschicht 11 angeordnet. Die Kavitäten 15 werden anschließend durch die Maskierung 23 hindurch in das Formteil 10 eingebracht.

Nach den weiteren Verfahrensschritten wird dann das Füllmaterial 16 derart in die Kavitäten 15 eingefüllt, dass die Kavität 15 bis zur Vorderseite der Maskierung 23 oder über die Vorderseite der Maskierung 23 hinaus mit Füllmaterial 16 gefüllt ist. Anschließend kann, vorzugsweise nach dem Aushärten des Füllmaterials 16, die Maskierung 23 entfernt werden, so dass ein Überstand 20 an Füllmaterial 16 an der Vorderseite 12 der Dekorschicht 11 erzeugt wird.

### Bezugszeichenliste

- 10: Formteil
- 11: Dekorschicht
- 12: Vorderseite
- 13: Rückseite
- 14: Träger
- 15: Kavität
- 16: Füllmaterial
- 17: Dosiereinheit
- 18: Oberfläche
- 19: Vertiefung
- 20: Überstand
- 21: Laser
- 22: Begrenzungsfläche
- 23: Maskierung
- 24: Messeinheit
- 25: Zwischenschicht
- 26: Belichtungseinheit

## Patentansprüche

1. Verfahren zum Herstellen eines Formteils (10),
wobei das Formteil (10) eine Dekorschicht (11) mit einer als Sichtseite ausgebildeten Vorderseite (12) und einer der Vorderseite (12) gegenüberliegenden Rückseite (13) und einen an der Rückseite (13) der Dekorschicht (11) angeordneten Träger (14) umfasst,
wobei in der Dekorschicht (11) ein oder mehrere Kavitäten (15) vorgesehen sind, wobei die Kavität oder Kavitäten (15) sich von der Vorderseite (12) der Dekorschicht (11) aus in das Formteil (10) hinein oder durch das Formteil (10) hindurch erstrecken und mit Füllmaterial (16) gefüllt sind,
wobei jede Kavität (15) für sich und/oder die Gesamtheit der Kavitäten (15) und/oder ein oder mehrere Teilmengen der Kavitäten (15) jeweils ein Symbol an der als Sichtseite ausgebildeten Vorderseite (12) der Dekorschicht (11) ausbilden,
wobei das Verfahren die Schritte umfasst:
a) Bereitstellen eines Dekormaterials zur Bildung der Dekorschicht (11),
b) Anbringen des Trägers (14) an die Rückseite (13) der Dekorschicht (11),
c) Einbringen einer oder mehrerer Kavitäten (15) von der Vorderseite (12) der Dekorschicht (11) aus,
d) Festlegen einer oder mehrerer zu befüllender Kavitäten (15),
e) Auswählen eines Füllmaterials (16) zum Füllen der Kavität oder Kavitäten (15),
f) Ausmessen des Volumens jeder zu befüllenden Kavität (15),
g) Festlegen einer vorgesehenen Füllhöhe des vorgesehenen Füllmaterials (16) für jede zu befüllende Kavität (15) einzeln oder für alle zu befüllenden Kavitäten (15),
h) Berechnen des individuellen Dosiervolumens des vorgesehenen Füllmaterials (16) für jede zu befüllende Kavität (15), wobei das Dosiervolumen in Abhängigkeit vom ausgemessenen Volumen der jeweiligen Kavität (15) und von der jeweils vorgesehenen Füllhöhe des Füllmaterials (16) berechnet wird,
i) Füllen der zum Befüllen festgelegten Kavität oder Kavitäten (15) mit dem jeweils berechneten Dosiervolumen des Füllmaterials (16) mittels einer Dosiereinheit (17),
j) Aushärten des Füllmaterials (16).

2. Verfahren nach Anspruch 1,
**dadurch gekennzeichnet,**
**dass** die vorgesehene Füllhöhe eine erste Füllhöhe ist, wobei zum Vorsehen der ersten Füllhöhe die Kavität oder Kavitäten (15) derart vollständig mit Füllmaterial (16) gefüllt werden, dass die sichtseitige Oberfläche (18) des Füllmaterials (16) in einer Ebene mit der Vorderseite (12) der Dekorschicht (11) liegt, oder
**dass** die vorgesehene Füllhöhe eine zweite Füllhöhe ist, wobei zum Vorsehen der zweiten Füllhöhe die Kavität oder Kavitäten (15) derart teilweise mit Füllmaterial (16) gefüllt werden, dass die sichtseitige Oberfläche (18) des Füllmaterials (16) hinter der Vorderseite (12) der Dekorschicht (11) zurücksteht, so dass eine Vertiefung (19) in der Vorderseite (12) der Dekorschicht (11) ausgebildet wird, oder
**dass** die vorgesehene Füllhöhe eine dritte Füllhöhe ist, wobei zum Vorsehen der dritten Füllhöhe die Kavität oder Kavitäten (15) derart mit Füllmaterial (16) überfüllt werden, dass die sichtseitige Oberfläche (18) des Füllmaterials (16) über die Vorderseite (12) der Dekorschicht (11) hinaussteht, so dass ein Überstand (20) an der Vorderseite (12) der Dekorschicht (11) ausgebildet wird.

3. Verfahren nach Anspruch 1 oder 2,
**dadurch gekennzeichnet, dass**
die Kavität oder Kavitäten (15) durch einen Laserprozess, insbesondere durch Laserablation, und/oder durch Mikrofräsen und/oder durch Ätzen und/oder durch elektroerosive Verfahren und/oder durch Stanzen und/oder durch Stanzschneiden in die Dekorschicht (11) eingebracht werden.

4. Verfahren nach einem der vorhergehenden Ansprüche,
**dadurch gekennzeichnet, dass**
das Volumen jeder zu befüllenden Kavität (15) durch eine Messeinheit (24) ausgemessen wird.

5. Verfahren nach einem der vorhergehenden Ansprüche,
**dadurch gekennzeichnet, dass**
beim Ausmessen des Volumens jeder zu befüllenden Kavität (15) auch die Position der jeweiligen Kavität (15) gemessen wird und die Dosiereinheit (17) zum Füllen der jeweiligen Kavität (15) mit Füllmaterial (16) positionsgenau zur jeweiligen Kavität (15) gesteuert wird.

6. Verfahren nach einem der vorhergehenden Ansprüche,
**dadurch gekennzeichnet,**
**dass** vor und/oder nach dem Einbringen der Kavität oder Kavitäten (15) die Vorderseite (12) der Dekorschicht (11) gereinigt wird, und/oder
**dass** vor dem Ausmessen des Volumens und/oder dem Füllen der Kavität oder Kavitäten (15) die Kavität oder Kavitäten (15), insbesondere Begrenzungsflächen (22) der Kavität oder Kavitäten (15), gereinigt und/oder, insbesondere durch Plasmabehandlung und/oder Koronabehandlung und/oder Bedampfung und/oder Begasung, vorbehandelt werden.

7. Verfahren nach einem der vorhergehenden Ansprüche,
**dadurch gekennzeichnet, dass**
vor dem Einbringen der Kavität oder Kavitäten (15) eine Maskierung (23) an der Vorderseite (12) der Dekorschicht (11) angebracht wird.

8. Verfahren nach einem der vorhergehenden Ansprüche,
**dadurch gekennzeichnet, dass**
das Füllmaterial (16) nach dem Füllen der Kavität oder Kavitäten (15) belichtet und/oder beheizt und/oder bestrahlt und/oder begast und/oder Luftfeuchtigkeit und/oder Unterdruck und/oder Überdruck ausgesetzt wird, um das Aushärten des Füllmaterials (16) zumindest zu unterstützen.

9. Verfahren nach einem der vorhergehenden Ansprüche,
**dadurch gekennzeichnet, dass**
die Verunreinigung und/oder Verfärbungen des das herzustellende Formteil (10) bildenden Bauteils nach dem Einbringen der Kavität oder Kavitäten (15) und/oder die Kantenqualität der Kavität oder Kavitäten (15) und/oder die Füllqualität des eingefüllten Füllmaterials (16) zumindest stichprobenartig gemessen und mit vorgegebenen Sollvorgaben verglichen werden, wobei bei einer Abweichung von Sollvorgaben Verfahrenskorrekturen und/oder Nachbearbeitungsschritte zur Angleichung an die Sollvorgaben durchgeführt werden.

10. Verfahren nach einem der vorhergehenden Ansprüche,
**dadurch gekennzeichnet, dass**
das Füllen der Kavität oder Kavitäten (15) in einem mindestens zweistufigen Prozess durchgeführt wird, wobei in der ersten Stufe zumindest die Schritte a) bis i) ausgeführt werden, wobei weiterhin ungefüllte und/oder nur teilweise gefüllte Kavitäten verbleiben, und anschließend in der zweiten Stufe zumindest folgende Schritte ausgeführt werden:
k) Festlegen einer oder mehrerer in der zweiten Stufe zu befüllender Kavitäten (15),
l) Auswählen eines Füllmaterials (16) zum Füllen der festgelegten Kavität oder Kavitäten (15) in der zweiten Stufe,
q) Aushärten des Füllmaterials (16).

11. Verfahren nach Anspruch 10,
**dadurch gekennzeichnet, dass**
in der zweiten Stufe zwischen den Schritten I) und q) zumindest folgende Schritte ausgeführt werden:
m) Ausmessen des noch nicht gefüllten Volumens jeder in der zweiten Stufe zu befüllenden Kavität (15),
n) Festlegen einer vorgesehenen Füllhöhe des vorgesehenen Füllmaterials (16) für jede zu befüllende Kavität (15) einzeln oder für alle zu befüllenden Kavitäten (15),
o) Berechnen des individuellen Dosiervolumens des vorgesehenen Füllmaterials (16) für jede zu befüllende Kavität (15), wobei das Dosiervolumen in Abhängigkeit vom ausgemessenen Volumen der jeweiligen Kavität (15) und von der jeweils vorgesehenen Füllhöhe des Füllmaterials (16) berechnet wird,
p) Füllen der zum Befüllen festgelegten Kavität oder Kavitäten (15) mit dem jeweils berechneten Dosiervolumen des Füllmaterials (16) mittels einer weiteren oder der Dosiereinheit (17).

## Claims

1. Method of manufacturing a moulded part (10),
wherein the moulded part (10) comprises a decorative layer (11) with a front side (12) formed as a visible side and a rear side (13) opposite the front side (12), and a carrier (14) arranged on the rear side (13) of the decorative layer (11),
wherein one or more cavities (15) are provided in the decorative layer (11), the cavity or cavities (15) extending from the front side (12) of the decorative layer (11) into or through the moulding (10) and being filled with filling material (16),
wherein each cavity (15) individually and/or the totality of the cavities (15) and/or one or more subsets of the cavities (15) each form a symbol on the front side (12), formed as a visible side, of the decorative layer (11),
the method comprising the steps of:
a) Providing a decorative material to form the decorative layer (11),
b) Attach the carrier (14) to the rear side (13) of the decorative layer (11),
c) Inserting one or more cavities (15) from the front side (12) of the decorative layer (11),
d) Determine one or more cavities to be filled (15),
e) Selecting a filling material (16) to fill the cavity or cavities (15),
f) Measure the volume of each cavity to be filled (15),
g) Determining an intended filling level of the intended filling material (16) for each cavity (15) to be filled individually or for all cavities (15) to be filled,
h) Calculating the individual dosing volume of the intended filling material (16) for each cavity (15) to be filled, the dosing volume being calculated as a function of the measured volume of the respective cavity (15) and of the respective intended filling height of the filling material (16),
i) Filling the cavity or cavities (15) determined for filling with the respectively calculated dosing volume of the filling material (16) by means of a dosing unit (17),
j) Curing of the filling material (16).

2. Method according to claim 1,
**characterised in that**
**that** the intended filling level is a first filling level, wherein for providing the first filling level the cavity or cavities (15) are completely filled with filling material (16) in such a way that the visible surface (18) of the filling material (16) lies in a plane with the front side (12) of the decorative layer (11), or
**that** the intended filling level is a second filling level, wherein for providing the second filling level the cavity or cavities (15) are partially filled with filling material (16) in such a way that the visible surface (18) of the filling material (16) protrudes behind the front side (12) of the decorative layer (11) so that a recess (19) is formed in the front side (12) of the decorative layer (11), or
**that** the provided filling level is a third filling level, wherein for providing the third filling level the cavity or cavities (15) are overfilled with filling material (16) in such a way that the visible surface (18) of the filling material (16) protrudes beyond the front side (12) of the decorative layer (11) so that an overhang (20) is formed at the front side (12) of the decorative layer (11).

3. Method according to claim 1 or 2,
**characterised in that**
the cavity or cavities (15) are introduced into the decorative layer (11) by a laser process, in particular by laser ablation, and/or by micro-milling and/or by etching and/or by electroerosive processes and/or by punching and/or by punch cutting.

4. Method according to any one of the preceding claims,
**characterised in that**
the volume of each cavity (15) to be filled is measured by a measuring unit (24).

5. Method according to any one of the preceding claims,
**characterised in that**
when measuring the volume of each cavity (15) to be filled, the position of the respective cavity (15) is also measured and the dosing unit (17) for filling the respective cavity (15) with filling material (16) is controlled with positional accuracy to the respective cavity (15).

6. Method according to any one of the preceding claims,
**characterised in that**
**in that the** front side (12) of the decorative layer (11) is cleaned before and/or after the introduction of the cavity or cavities (15), and/or
**in that,** before measuring the volume and/or filling the cavity or cavities (15), the cavity or cavities (15), in particular boundary surfaces (22) of the cavity or cavities (15), are cleaned and/or pretreated, in particular by plasma treatment and/or corona treatment and/or vapour deposition and/or gassing.

7. Method according to any one of the preceding claims,
**characterised in that**
a masking (23) is applied to the front side (12) of the decorative layer (11) prior to the insertion of the cavity or cavities (15).

8. Method according to any one of the preceding claims,
**characterised in that**
the filling material (16) is exposed and/or heated and/or irradiated and/or gassed and/or exposed to humidity and/or negative pressure and/or positive pressure after filling the cavity or cavities (15) in order to at least support the curing of the filling material (16).

9. Method according to any one of the preceding claims,
**characterised in that**
the contamination and/or discolouration of the component forming the moulded part (10) to be produced after the introduction of the cavity or cavities (15) and/or the edge quality of the cavity or cavities (15) and/or the filling quality of the introduced filling material (16) are measured at least on the basis of random samples and are compared with predetermined desired specifications, wherein, in the event of a deviation from desired specifications, process corrections and/or post-processing steps are carried out for adaptation to the desired specifications.

10. Method according to any one of the preceding claims,
**characterised in that**
the filling of the cavity or cavities (15) is carried out in an at least two-stage process, wherein in the first stage at least the steps a) to i) are carried out, with unfilled and/or only partially filled cavities remaining, and subsequently in the second stage at least the following steps are carried out:
k) Defining one or more cavities (15) to be filled in the second stage,
I) Selecting a filling material (16) for filling the defined cavity or cavities (15) in the second stage,
q) Curing of the filling material (16).

11. Method according to claim 10,
**characterised in that**
at least the following steps are carried out in the second stage between steps I) and q):
m) Measuring the unfilled volume of each cavity to be filled in the second stage (15),
n) Determining an intended filling level of the intended filling material (16) for each cavity (15) to be filled individually or for all cavities (15) to be filled,
o) Calculating the individual dosing volume of the intended filling material (16) for each cavity (15) to be filled, the dosing volume being calculated as a function of the measured volume of the respective cavity (15) and of the respective intended filling height of the filling material (16),
p) Filling the cavity or cavities (15) determined for filling with the respectively calculated dosing volume of the filling material (16) by means of a further or the dosing unit (17).

## Revendications

1. Procédé de fabrication d'une pièce moulée (10),
la pièce moulée (10) comprenant une couche décorative (11) avec une face avant (12) conçue comme face visible et une face arrière (13) opposée à la face avant (12), et un support (14) disposé sur la face arrière (13) de la couche décorative (11),
une ou plusieurs cavités (15) étant prévues dans la couche décorative (11), la ou les cavités (15) s'étendant à partir de la face avant (12) de la couche décorative (11) dans la pièce moulée (10) ou à travers la pièce moulée (10) et étant remplies de matériau de remplissage (16),
chaque cavité (15) en soi et/ou la totalité des cavités (15) et/ou une ou plusieurs quantités partielles des cavités (15) formant respectivement un symbole sur la face avant (12) de la couche décorative (11) réalisée sous forme de face visible,
ledit procédé comprenant les étapes consistant à
a) fournir un matériau de décoration pour former la couche de décoration (11),
b) application du support (14) sur la face arrière (13) de la couche décorative (11),
c) l'introduction d'une ou de plusieurs cavités (15) à partir de la face avant (12) de la couche décorative (11),
d) définir une ou plusieurs cavités (15) à remplir,
e) sélectionner un matériau de remplissage (16) pour remplir la ou les cavités (15),
f) mesurer le volume de chaque cavité (15) à remplir,
g) la détermination d'un niveau de remplissage prévu du matériau de remplissage prévu (16) pour chaque cavité (15) à remplir individuellement ou pour toutes les cavités (15) à remplir,
h) calculer le volume de dosage individuel du matériau de remplissage (16) prévu pour chaque cavité (15) à remplir, le volume de dosage étant calculé en fonction du volume mesuré de la cavité (15) respective et de la hauteur de remplissage respectivement prévue du matériau de remplissage (16),
i) remplissage de la cavité ou des cavités (15) définies pour le remplissage avec le volume de dosage respectif calculé du matériau de remplissage (16) au moyen d'une unité de dosage (17),
j) durcissement du matériau de remplissage (16).

2. Procédé selon la revendication 1,
**caractérisé en ce que**
**en ce que** le niveau de remplissage prévu est un premier niveau de remplissage, la cavité ou les cavités (15) étant, pour prévoir le premier niveau de remplissage, entièrement remplies de matériau de remplissage (16) de telle sorte que la surface (18) côté visible du matériau de remplissage (16) se trouve dans un plan avec la face avant (12) de la couche décorative (11), ou
**en ce que** le niveau de remplissage prévu est un deuxième niveau de remplissage, la cavité ou les cavités (15) étant partiellement remplies de matériau de remplissage (16) pour prévoir le deuxième niveau de remplissage, de telle sorte que la surface (18) côté visible du matériau de remplissage (16) est en retrait derrière la face avant (12) de la couche décorative (11), de sorte qu'un creux (19) est formé dans la face avant (12) de la couche décorative (11), ou
**en ce que** le niveau de remplissage prévu est un troisième niveau de remplissage, la cavité ou les cavités (15) étant, pour prévoir le troisième niveau de remplissage, surremplies de matériau de remplissage (16) de telle sorte que la surface (18) côté visible du matériau de remplissage (16) dépasse de la face avant (12) de la couche décorative (11), de sorte qu'un dépassement (20) est formé sur la face avant (12) de la couche décorative (11).

3. Procédé selon la revendication 1 ou 2,
**caractérisé en ce que**
la ou les cavités (15) sont réalisées dans la couche décorative (11) par un processus laser, en particulier par ablation laser, et/ou par micro-fraisage et/ou par gravure et/ou par des procédés d'électro-érosion et/ou par estampage et/ou par découpage à la presse.

4. Procédé selon l'une quelconque des revendications précédentes,
**caractérisé en ce que**
le volume de chaque cavité (15) à remplir est mesuré par une unité de mesure (24).

5. Procédé selon l'une quelconque des revendications précédentes,
**caractérisé en ce que**
lors de la mesure du volume de chaque cavité (15) à remplir, on mesure également la position de la cavité (15) respective et on commande l'unité de dosage (17) pour remplir la cavité (15) respective avec du matériau de remplissage (16) en position exacte par rapport à la cavité (15) respective.

6. Procédé selon l'une quelconque des revendications précédentes,
**caractérisé en ce que**
**en ce que,** avant et/ou après l'introduction de la cavité ou des cavités (15), la face avant (12) de la couche décorative (11) est nettoyée, et/ou
**qu**'avant la mesure du volume et/ou le remplissage de la cavité ou des cavités (15), la cavité ou les cavités (15), en particulier les surfaces de délimitation (22) de la cavité ou des cavités (15), sont nettoyées et/ou prétraitées, en particulier par traitement au plasma et/ou par traitement corona et/ou par vaporisation et/ou par gazage.

7. Procédé selon l'une quelconque des revendications précédentes,
**caractérisé en ce que**
un masquage (23) est appliqué sur la face avant (12) de la couche décorative (11) avant la mise en place de la cavité ou des cavités (15).

8. Procédé selon l'une quelconque des revendications précédentes,
**caractérisé en ce que**
le matériau de remplissage (16) est exposé à la lumière et/ou chauffé et/ou irradié et/ou gazéifié et/ou exposé à l'humidité de l'air et/ou à une dépression et/ou à une surpression après le remplissage de la cavité ou des cavités (15), afin de favoriser au moins le durcissement du matériau de remplissage (16).

9. Procédé selon l'une quelconque des revendications précédentes,
**caractérisé en ce que**
les impuretés et/ou les décolorations de la pièce formant la pièce moulée (10) à fabriquer après l'introduction de la cavité ou des cavités (15) et/ou la qualité des arêtes de la cavité ou des cavités (15) et/ou la qualité de remplissage du matériau de remplissage (16) introduit sont mesurées au moins par échantillonnage et comparées à des prescriptions de consigne prédéfinies, des corrections de procédé et/ou des étapes de post-traitement étant effectuées pour s'adapter aux prescriptions de consigne en cas d'écart par rapport aux prescriptions de consigne.

10. Procédé selon l'une quelconque des revendications précédentes,
**caractérisé en ce que**
le remplissage de la cavité ou des cavités (15) est effectué dans un processus au moins en deux étapes, au moins les étapes a) à i) étant exécutées dans la première étape, des cavités non remplies et/ou seulement partiellement remplies continuant à subsister, et ensuite au moins les étapes suivantes étant exécutées dans la deuxième étape :
k) définir une ou plusieurs cavités (15) à remplir dans la deuxième étape,
l) sélectionner un matériau de remplissage (16) pour remplir la ou les cavité(s) (15) spécifiée(s) dans la deuxième étape,
q) durcissement du matériau de remplissage (16).

11. Procédé selon la revendication 10,
**caractérisé en ce que**
dans la deuxième étape, entre les étapes I) et q), au moins les étapes suivantes sont exécutées:
m) mesurer le volume non encore rempli de chaque cavité (15) à remplir au cours de la deuxième étape,
n) définir un niveau de remplissage prévu du matériau de remplissage prévu (16) pour chaque cavité (15) à remplir individuellement ou pour toutes les cavités (15) à remplir,
o) calculer le volume de dosage individuel du matériau de remplissage (16) prévu pour chaque cavité (15) à remplir, le volume de dosage étant calculé en fonction du volume mesuré de la cavité (15) respective et de la hauteur de remplissage respectivement prévue du matériau de remplissage (16),
p) remplir la cavité ou les cavités (15) définies pour le remplissage avec le volume de dosage respectif calculé du matériau de remplissage (16) au moyen d'une autre ou de l'unité de dosage (17).
